# EUROPEAN PATENT SPECIFICATION

(11) **EP 2 711 873 B1**
(45) Date of publication and mention of the grant of the patent: **08.04.2020**
(21) Application number: 11865522.4
(22) Date of filing: 27.05.2011
(51) Int. Cl.: G06K 19/077

(54) **CARD USING DETONATOR AND METHOD FOR MANUFACTURING SAME**
KARTE MIT EINEM ZÜNDER UND VERFAHREN IHRER HERSTELLUNG
CARTE UTILISANT UN DÉTONATEUR ET PROCÉDÉ DE FABRICATION DE CETTE CARTE

(30) Priority: 16.05.2011 KR 20110045560
(43) Date of publication of application: 26.03.2014
(73) Proprietor: ICK Corporation, Daegu-si 704-240 (KR); Kang, Soohyang, Daegu-si 700-818 (KR)
(72) Inventor: KANG, Soohyang, Daegu-si 700-818 (KR)
(74) Representative: Kransell & Wennborg KB
(86) International application number: PCT/KR2011/003897
(87) International publication number: WO 2012/157805

(56) References cited:
- EP-A2- 0 163 534
- EP-A2- 1 093 082
- DE-A1- 19 708 617
- JP-A- 10 193 845
- JP-A- H09 505 533
- JP-A- 2001 513 928

## Description

### [Technical Field]

The present invention relates to a card bonding by the priming explosion and method of manufacturing the same. More particularly, an antenna coil of the card will be confidentially adhered to a connector of the IC chip by induced explosion of the priming to achieve the reduction of the defect cards, rapid manufacturing process, and resolving the adverse effect of the environment.

### [Background Art]

Commonly, a smart card with built-in microchip is widely used for logical operation. The various kind of cards, such as a banking card, transportation card, ID card, Network connecting card are world widely used for variety of purposes. The memory card is used to perform a function of storing Data only, even if it has built-in chip like a smart card.

Such a collective card including the smart card and the memory card is normally called the IC (Integrated Circuit) card. In recent years, the IC card has rapidly developed according to the rapid increasing of the Internet activities and the variation of information-communication environment. The electronic-commerce is used for variety of purposes, such as a banking, transportation, and social ID.

Hereby, the smart card is divided into two kind cards in accordance with the method of external connection for communication. One is the direct-contact card, which communicates the Data through the connector exposed on the surface. The other is the indirect-contact card, which communicates the Data through the built-in antenna coil.

At this moment, for the case of direct-contact card, the card will be inserted into the card reader. For the case of indirect-contact card, the card will be scanned on the card reader by bring it closer for transmitting the information.

Additionally, the smart card can be further classified according to the method of combination for aforementioned two types. One is a hybrid card, which has stored two separate chips for direct-contact type and indirect-contact type in one card. The other one is the dual-interface card, i.e. combination card having single chip for direct-contact type and indirect-contact type in one card.

Among those, the combination card having single chip for direct-contact and indirect-contact types in one card has designed to mount an IC chip through one process. This card is the best one and most advanced card among the presently existing smart cards.

For example, the conventional smart card and combination card have disclosed in the Republic of Korea Publication No. 10-2004-67184, Publication No. 10-2004-83735 and Publication No. 10-2003-19521.

Namely, the Republic of Korea, Publication No. 10-2004-67184 has disclosed "the smart card having connector of the loop coil coated with the conductive paste and its manufacturing method", which is related to the technology of an antenna coil of the card adhering to a connector of the IC chip by using a conductive adhesive.

Additionally, the Republic of Korea Publication No. 10-2004-83735 disclosed "method of hot-melt adhesive sheet for manufacturing the combination type of IC card" for adhering an antenna coil of the card to the connector of the IC chip by using the technology of hot-melt adhesive sheet.

Further, the Republic of Korea Publication No. 10-2003-19521 disclosed "the method of mounting an IC chip on the combination type of IC card by soldering" for soldering the antenna coil of the card to the connector of the IC chip.

However, the Republic of Korea Publication No. 10-2004-67184 disclosed the usage of the conductive adhesion and the Republic of Korea Publication No. 10-2004-83735 disclosed the hot-melt sheet for bonding the antenna coil to the connector of the IC card chip. Even more, the cards produced through the aforementioned technologies have problem of bonding defect while it is manufacturing or using due to the poor adhesive durability.

In addition, the Republic of Korea Publication No. 10-2003-19521 disclosed the bonding of the antenna coil to the connector of IC chip by soldering. The soldering has problems that the melted solder frequently mass up a lump to decrease the adherence during the manufacturing process. The soldering is so complicated process as well as generating the harmful toxic gas, and adverse affect of the environment.

### [Disclosure]

### [Technical Problem]

The purpose of the present invention is to solve the aforementioned problems. Particularly, the antenna coil of the card will densely adhere to the connector of the IC chip by induced explosion of the priming. Therefore, a new method of adhering will be enhanced to reduce the defect cards comparing with the conventional adhering and simplifying the manufacturing process as well as improving the quality of productivity and eliminating the adverse effect of the environment.

### [Technical Solution]

A method for manufacturing a card by using priming, useful for understanding the present invention, is comprising: (a) step of forming a first (outer) groove (181) from front overlay sheet (110) to exposed surface of an antenna coil (135) of an inlay sheet (130); (b) step of forming a second (inner) groove (182) from the inlay sheet (130) to mid portion of rear surface of a printed sheet (140); (c) step of exposing the antenna coil (135) of the inlay sheet (130) and a connector (166) of IC chip (165) to be adhered, together; (d) step of applying the priming (136) on the exposed surface of the antenna coil (135) of the inlay sheet (130); (e) step of mounting an IC chip base (160) installed on the IC chip (165) and an IC chip molding part (163) into the grooves (181, 182) and step of contacting the priming (136) to the connector (166) of IC chip (165); and (f) step of applying heat to explode the priming (136), which is coated between the antenna coil (135) and the connector (166) of the IC chip (165), so that the antenna coil (135) and the connector (166) of the IC chip (165) will intensively adhere, together.

Preferably, prior step (f), the process further comprising, (e1) step of attaching a glue tape (185) on the IC chip base (160) and the inlay sheet (130).

Preferably, at the phase of step (f), the process further comprising; step of reacting the priming (136), which is consisted of an acid material below than PH4 in the periodic chart, and pro- or aft- 15 family-metal and exploding to generate the high heat, simultaneously. Then, the metal of pro- or aft- 14 family-metal in the chemical chart will be meted to bond the antenna coil (135) and the connector (166) of the IC chip (165), together.

Additionally, the priming (136) will explode when it applies an external heat of 160°C∼210°C for 1 ∼ 0.5 seconds.

In order to achieve the objective of the present invention, the method for manufacturing a card by using priming comprises, a step of adhering a front printed sheet (120), an antenna coil (135), a winded inlay sheet (130) and a rear printed sheet (140) in sequence; step of exposing the antenna coil (135) of the inlay sheet (130) through the grooving; and step of adhering the antenna coil (135) to the connector (166) of the IC chip (165) through the explosion of the priming (136).

Preferably, the priming (136) consists of a nitrate, bismuth, tin and flux. The nitrate will react with the bismuth by applying the external heat to explode and generate the high heat, simultaneously. Then, the tin and flux are melted to bond the connector.

More preferably, the priming (136) consists of the gunpowder, tin and flux. The priming (136) will explode by applying the external heat and generate the high heat, simultaneously. Then, the tin and flux are melted to bond the connector.

Additionally, the priming (136) includes a component of silver (Ag) to improve the characteristic of the antenna.

Additionally, the antenna coil (135) has formed a zigzag shape of bend (137) at both ends to widen the contacting area between the connectors (166) of the IC chip (165).

Another method for manufacturing the card by using priming, useful for understanding the process, comprises: (a) step of exposing the antenna coil (135) of the inlay sheet (130) and applying the priming (136) on the exposed the antenna coil (135) of the inlay sheet (130); (b) step of abutting the connector (166) of the IC chip (165) and the priming (136) to contact each other; and (c) step of exploding the priming (136) coated on the antenna coil (135) and the connector (166) of the IC chip (165) and adhering the connector (166) of the and the IC chip (165) to the antenna coil (135).

Preferably, the priming (136) is consisted of a nitrate, bismuth, tin and flux. The nitrate and the bismuth react by applying the external heat to generate the high heat, simultaneously for melting the tin and flux to bond the connector.

Additionally, the priming (136) is consisted of a gunpowder, tin and flux. The priming (136) will explode by applying the external heat. The high heat will be generated through the exploding of the gunpowder, simultaneously. Then, the tin and flux are melted to adhere the connector.

### [Technical Objective]

### [Advantageous Effects]

According to the method of manufacturing a card using priming of the present invention, the antenna coil of the card, connector of the IC chip will bonded by induced explosion of a priming. This process improves the adhesion of the card, reducing the defects and simplifying the manufacturing process comparing to the existing bonding method of the card, as well as increasing the productivity, maintaining the function in good condition, permanently and avoiding the using of the hazardous substances, such as a lead so that it is possible to provide the card environmentally friendly.

In addition to the above objectives, other objects and merits of the present invention will be obviously revealed through the detail description of embodiments with reference to the accompanying drawings.

### [Brief Description of the Drawings]

Fig. 1 shows an example of a laminated sheet of a card applying to the embodiment of the present invention.
Fig. 2 shows the laminating process of Fig. 1 card sheet.
Fig. 3 shows the laminated card sheet of Fig. 2 through the laminating process of card sheet.
Fig. 4 shows the first (outer) grooving on Fig. 3 card sheet.
Fig. 5 shows the second (inner) grooving on Fig. 4 card sheet.
Fig. 6 is a schematic diagram of an IC chip of the present invention.
Fig. 7 shows the third grooving on Fig. 5 card sheet.
Fig. 8 shows the coating of the priming of the present invention.
Fig. 9 is a priming dispenser for coating of the present invention.
Fig. 10 shows an example of temporary junction for an antenna coil of the IC chip of the present invention.
Fig.11 shows an example of a card produced by priming explosion of the present invention.
Fig.12 shows an example of an end-bend formed zigzag shape for an antenna coil of the present invention.

### [The Detailed Description of The Invention]

Hereinafter, a method of manufacturing a card using priming explosion of the present invention will be described in detail accompanying with the drawings.

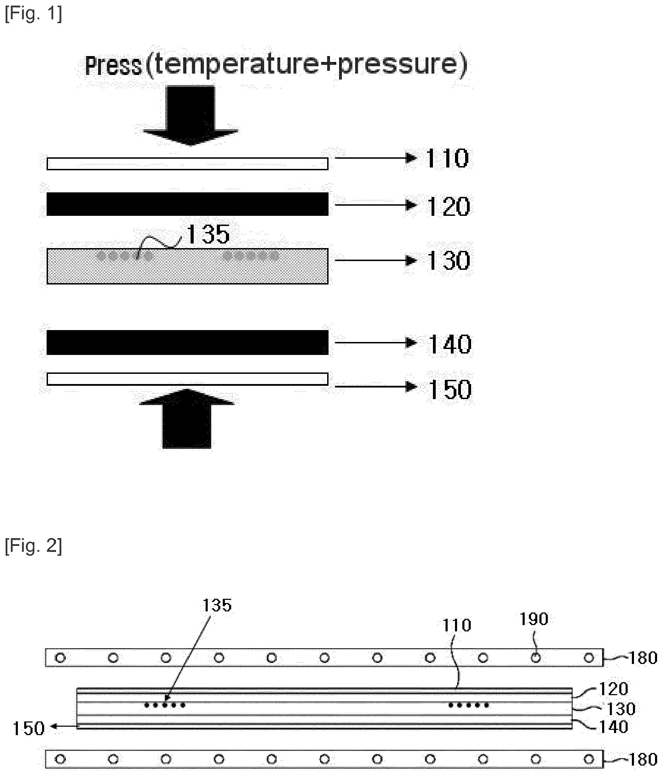

First, referring to Fig. 1 to Fig. 11, one aspect of the method of manufacturing a card using priming explosion of the present invention is described.

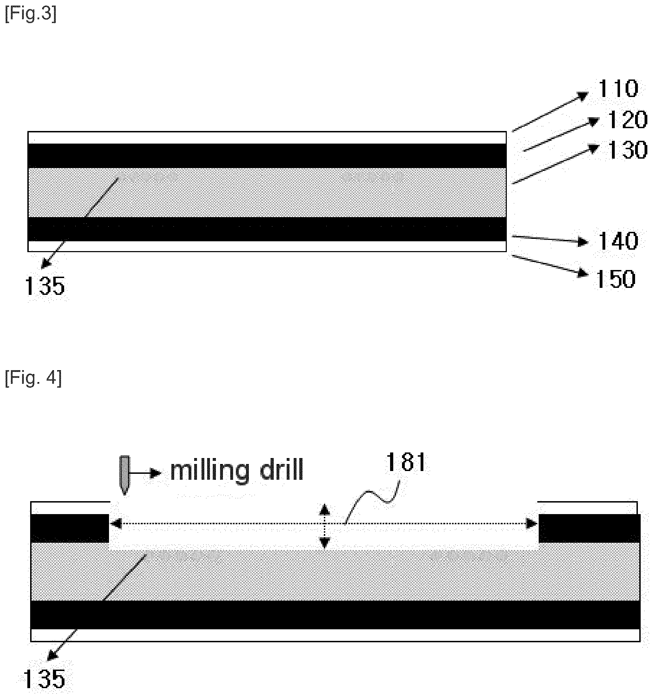

Fig. 1 shows an example of a laminated sheet of a card applying to the embodiment of the present invention. Fig. 2 shows the laminating process of Fig. 1 card sheet. Fig. 3 shows the laminated card sheet of Fig. 2 through the laminating process of card sheet.

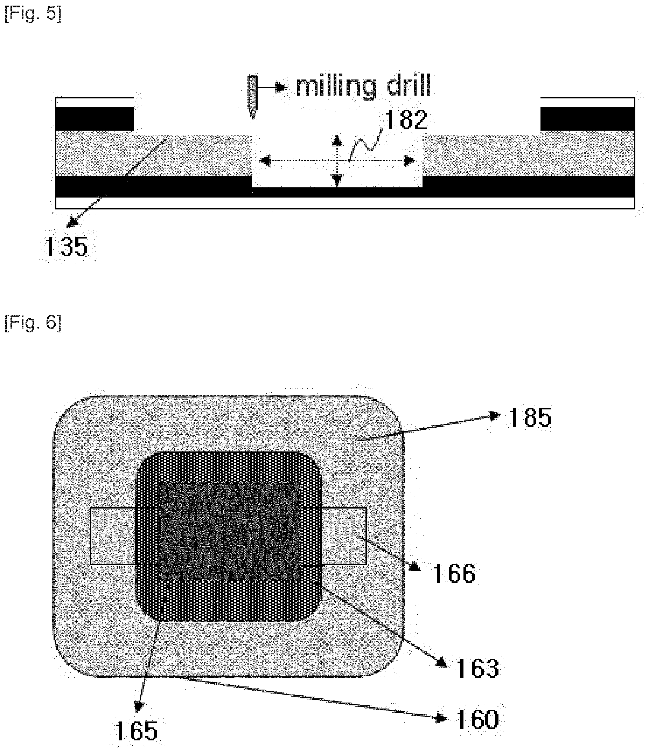

Fig. 4 shows the first (outer) grooving on Fig. 3 card sheet. Fig. 5 shows the second (inner) grooving on Fig. 4 card sheet. Fig. 6 is a schematic diagram of an IC chip of the present invention.

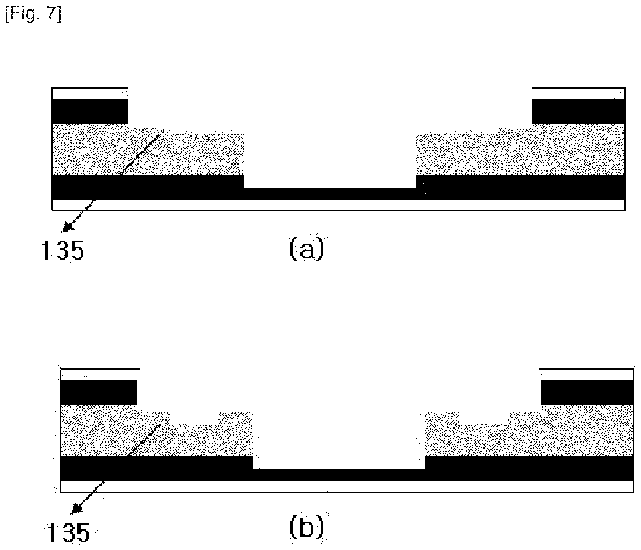

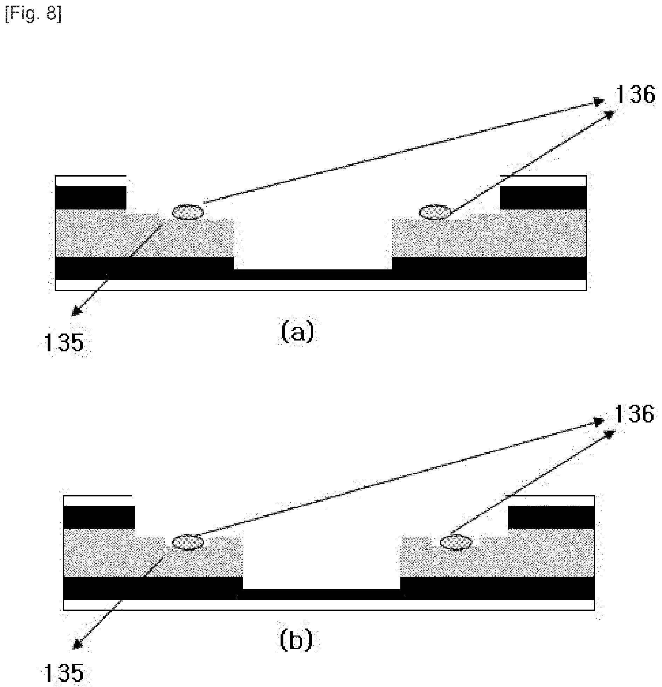

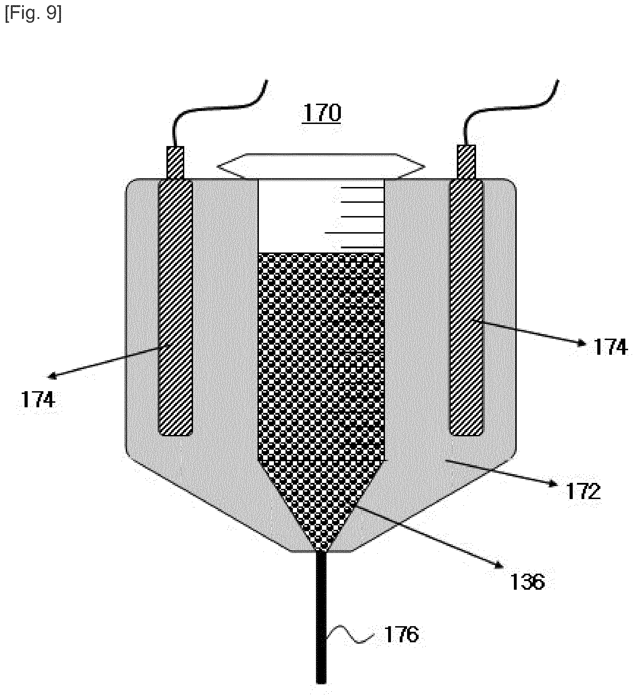

Fig. 7 shows the third grooving on Fig. 5 card sheet. Fig. 8 shows the coating of the priming of the present invention. Fig. 9 is a priming dispenser for coating of the present invention.

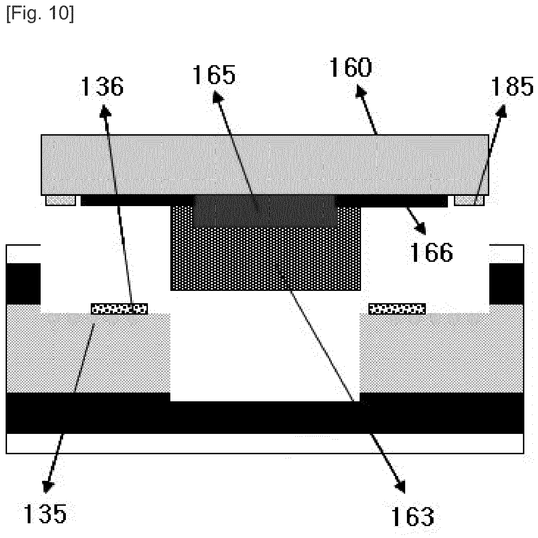

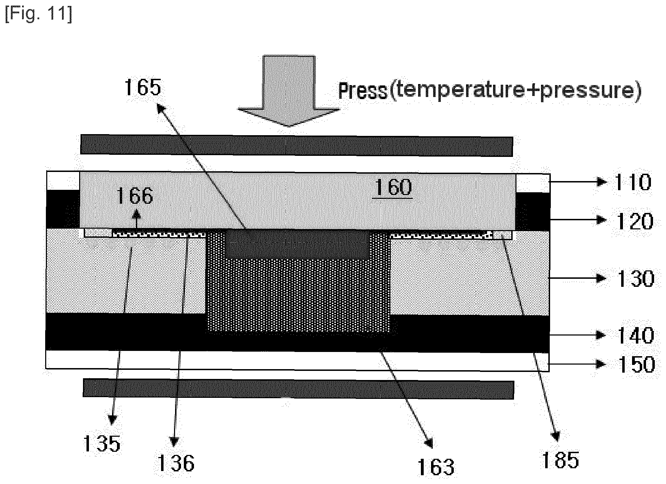

Fig. 10 shows an example of temporary junction for an antenna coil of the IC chip of the present invention. Fig.11 shows an example of a card produced by priming explosion of the present invention.

First, as shown in Fig. 1, according to a method of manufacturing the card by using priming explosion of the present invention, the card is fabricated laminating the sheet in sequential order from the top, front overlay sheet (110), front printed sheet (120), inlay sheet (130), rear printed sheet (140) and rear overlay sheet (150). As shown in Fig. 2, the laminated sheet is heated up to 150°C∼160°C of temperature through a heater rod (190) built-in laminator (180) and pressing the laminated sheet with 15∼19 kg/cm² of pressure for 14∼16 minutes. Then, the laminating sheet is bonded, together as shown in Fig. 3.

Herein, the inlay sheet (130) as a core sheet will be determined the thickness of the card. The card thickness is approximately 0.3mm. The material would be transparent or opaque made of resin with a laminated built-in winding of the antenna coil (135). In this case, the start point and end point of the winding antenna coil (135) (which will be described later) are formed the connectors of the IC chip (166). Hereby, a detail description of the coil-winding technology will be omitted, because it is well known technology in this art.

The front printing sheet (120) made of synthetic resin is adhered on the inlay sheet (130) to form approximately 0.10∼0.25mm thickness. The basic design and data, such as a hologram and a card expiration date will be printed on it.

The front overlay sheet (110) made of transparent synthetic resin having approximately 0.05∼0.10mm thickness will be adhered to the front printing sheet (120) to protect the printed design of the front sheet (120).

The front printing sheet (120) and the rear printing sheet (140), which are made of the same materials and thickness will be adhered to the rear inlay sheet (130). On the outer surface, the magnetic stripe may be deposited to print a credit card issuing company, phone number, and caution message for using the card.

The front overlay sheet (110) and the rear overlay sheet (150), which are made of the same materials will be adhered to the rear surface of the rear printing sheet (140) for protecting the design printed on the back of the rear printing sheet (140).

On the other hand, after the laminating process, the IC chip base (160) will be mounted as seen in Fig. 6. The milling process is performed to form a first grooving (181) from the front overlay sheet (110) to the exposed surface of the antenna coil (135) of the inlay sheet (130) as shown in FIG. 4.

Then, as shown in Fig. 5, the molding part (163) is inserted for protecting the IC chip (165) as seen in Fig. 6. The second grooving (182) is performed from the inlay sheet (130) to the mid portion of the rear printed sheet (140) to form the second groove (182).

Next, as shown in Fig. 7 (a), in order to adhere the connector (166) of the IC chip (165) to the antenna coil (135) being wound around the inlay sheet (130) as seen in Fig. 6, the exposed surface of the antenna coil (135) of the inlay sheet (130) is cutting to perform a third grooving, so that 1/3 to 1/2 of the antenna coil (135) will be exposed to the outside.

At this moment, as shown in Fig. 7 (b), excluding the exposed surface, the rest of the antenna coil (135) of the Inlay sheet (130) forms a covered-convex. A shape of recess ( 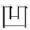 ) groove forms on the inlay sheet (130) to prevent the default of non-response due to the back surface of the IC chip (165) synthesized with the Circuit Trace.

Since, as shown in Fig. 8, the exposed surface of the antenna coil (135) of the inlay sheet (130) formed via third grooving will be coated with the liquid priming (136) by the priming dispenser (170) as shown in Fig. 9.

At this point, the priming (136) is consisted of an acidic material, which is lower than PH4, like a nitrate, a pro- or aft- 15 family-metal in the periodic table of the elements, such as a bismuth, a pro- or aft- 14 family-metal, such as a tin, and a pro- or aft- 11 family-metal, such as a silver or flux (flux solvent). For example, the hot stamping will react the nitrate and bismuth by the external heat created via the ultrasonic welding machine. The exploding of the priming and generating of the high heat are occurred, simultaneously. The tin, silver, and flux are melted to bond the antenna coil (135) and the connector (166) of the IC chip (165), together.

Herein, the present invention explains that the nitrate and bismuth explode by applying the external heat. But, the mixture of the tin, silver and the flux is a fine powder in the nano-sized particles. The explosion of the mixture could densely adhere the antenna coil (135) and the connector (166) of the IC chip (165). The material with the excellent conductivity, such as silver (Ag) can be selectively mixed to improve the antenna characteristic.

On the other hand, the priming dispenser (170) as shown in Fig. 9 will operate for manufacturing the card. The insulating cap (172) contains the liquid priming (136) to maintain 25°C of the constant temperature with more than one built-in heater rod (174). The heater rod (174) is apart from the priming (136) to avoid the direct contact each other. The injector (176) is designed to dispense the constant amount of priming for coating operation. A paste of the priming (136) is stored in the refrigerator for the normal time. The proper amount of the paste priming (136) is taken out to use for coating operation. The viscosity of the paste state of the priming is diluted, when it is exposed above 25°C of the room temperature. Since the paste priming is melted to be diluted liquid, it is possible to automatically dispense the constant amount of liquid priming through the injector (176) of the dispenser (170).

Subsequently, as shown in Fig. 10 and Fig. 11, an IC chip base (160), which is equipped with the IC chip (165) and the IC chip molding part (163) are mounted in the grooves (181, 182), which are formed via the first and second grooving. The connector (166) of the IC chip (165) and the antenna coil (135) are bonded, together. The glue tape (185) is temporarily attached to bond the IC chip base (160) and the inlay sheet (130).

Then, the priming (136) coated between the antenna coil (135) and the connector (166) of the IC chip (165) is heated 160°C∼210°C of the temperature for 0.5∼1.0 second, igniting two times through the ultrasonic welding machine or the Hot Stamping processer. The explosion of the priming (136) will bond the antenna coil (135) and the connector (166) of the IC chip (165) together. Then, the glue tape (185) is heated to 195°C∼230°C of the temperature for 1∼1.5 seconds one time for melting to bond the IC chip base (160) and the inlay sheet (130). Then, the cold pressure is applied to cool down and complete the card.

At this moment, the reason why the ignition of the priming (136) is set to apply the heat twice instead of once, it would avoid to damage the card, which is made of synthetic resin material, and to protect the IC chip. Furthermore, the reason why the ignition heating range is set 160°C∼210°C of the temperature for 0.5∼1 second, the priming (136) will not ignite bellow 160°C for less than 0.5 seconds, and the IC chip (165) will be damaged for applying the heating exceed 210°C and for exceeding one second.

Additionally, the reason why the heating range of the glue tape (185) is set 195°C∼230°C of the temperature for 1 to 1.5 seconds, the glue tape (185) will not properly melt below than 195°C for less than one second of time, and the card will be deformed when the heating exceed than 230°C for exceed than 1.5 seconds.

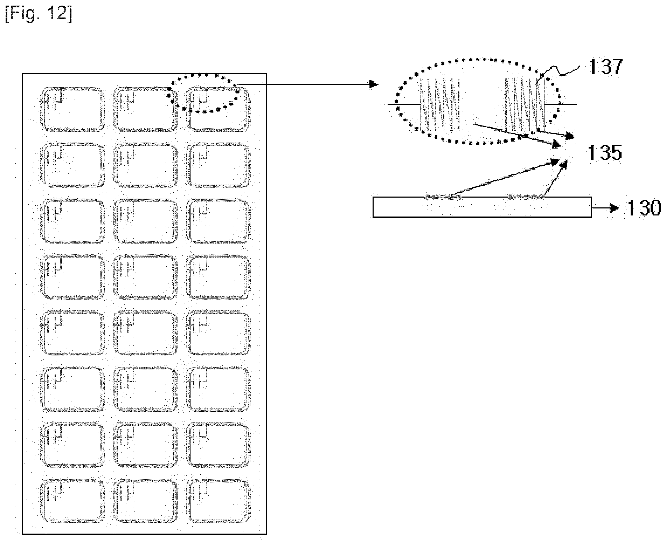

Hereinafter, another aspect of the method for manufacturing a card using priming of the present invention will be described in detail with reference to Fig. 11 and Fig. 12.

Fig.12 shows an example of an end-bend formed zigzag shape for an antenna coil of the present invention.

As shown in Fig. 11, according to another aspect of the present invention, the method for manufacturing a card using priming, the card is fabricated from the top in sequence that: the front overlay (110), front printing sheet (120), the inlay sheet (130) being wound the antenna coil (135), the rear-printing sheet (140) and the rear overlay sheet (150). The grooving operation is performed via the milling-drill to expose the antenna coil (135) of the inlay sheet (130). The exposed antenna coil (135) is bonded to the connector (166) of the IC chip (165) by the explosion of the liquid priming (136).

At this point, the priming (136) is consisted of a nitrate, bismuth, tin, silver and flux. First, the nitric acid and bismuth will react by applying the external heat. The exploding generates the high heat to melt the tin, silver, and the flux. The antenna coil (135) and the connector (166) of the IC chip (165) will be adhered, together.

However, as mentioned above, it is described that the nitrate and bismuth explode by the external heat. The mixture of the tin, silver and flux is in nano-sized particles. The gunpowder mixture explodes to bond the antenna coil (135) and the connector (166) of the IC chip (165). The material with an excellent conductivity, such as silver (Ag) is selectively mixed to improve the antenna characteristic.

On the other hand, the antenna coil is winding on the inlay sheet (130) to perform the function of antenna with the external device. Both ends of the antenna coil (135) formed zigzag-shaped bends (137) are bonded to the connectors (166) of the IC chip (165), as shown in Fig. 12.

In other words, the formation of the zigzag shape of the bending part (137) widen the contact area of the antenna coil (135) and the connector (166) of the IC chip (165) to enhance the contacting efficiency as well as the contacting confidence

In other words, it is sure that the present invention can be applied to RF card, IC card, a hybrid card and combination card.

## Claims

1. A method for manufacturing a card comprising the steps of:
adhering a laminate of a front printed sheet (120), an antenna coil (135), a winded inlay sheet (130) and a rear-printed sheet (140) in sequence; and
exposing the antenna coil (135) of the inlay sheet (130) through a grooving operation, **characterized in that** the method further comprises the steps of:
adhering the antenna coil (135) to the connector (166) of an integrated circuit, IC, chip (165) by igniting to explode a priming (136) by applying an external heat of 160°C∼210°C for 0.5 to 1 second to the priming (136).

2. The method for manufacturing a card as claimed in claim 1 wherein said priming (136) consists of a nitrate, bismuth, tin and flux and the method further comprises the steps of:
reacting the nitrate and the bismuth by applying external heat to explode and generate high heat simultaneously; and
melting the tin and flux to bond the connector.

3. The method for manufacturing a card as claimed in claim 1 further comprising the steps of:
exploding the priming (136), which is composed of gunpowder, tin and flux, by applying external heat and generating high heat simultaneously; and
melting the tin and flux to bond the connector.

4. The method for manufacturing a card as claimed in claim 2 or 3 comprising the step of:
including a component of silver, Ag, in the priming (136) to improve the characteristic of the antenna.

5. The method for manufacturing a card as claimed in claim 1 further comprising the step of:
forming a zigzag shape at both ends of bends (137) of the antenna coils (135) to widen the contacting area to the connectors (166) of the IC chip (165).

6. The method for manufacturing a card as claimed in claim 1, wherein said priming (136) consists of a nitrate, bismuth, tin and flux.

7. The method for manufacturing a card as claimed in claim 1, wherein said priming (136) consists of gunpowder, tin and flux.

8. The method for manufacturing a card as claimed in claim 1 further comprising the following step prior to the adhering step:
attaching a glue tape (185) on the IC chip base (160) and the inlay sheet (130).

9. The method for manufacturing a card as claimed in claim 1 further comprising the following steps at the phase of the adhering step:
reacting an acid material to below PH4 in the periodic chart and a pro- or aft-15 family metal to generate high heat by exploding the priming (136) simultaneously; and
melting a pro- or aft- 14 family metal in the chemical chart to bond the antenna coil (135) and the connector (166) of the IC chip (165).

## Patentansprüche

1. Verfahren zum Herstellen einer Karte, folgende Schritte umfassend:
Verkleben eines Laminats aus einem vorn bedruckten Blatt (120), einer Antennenspule (135), einem gewickelten Einlegeblatt (130) und einem rückseitig bedruckten Blatt (140) in Folge; und
Freilegen der Antennenspule (135) des Einlegeblatts (130) durch einen Rillenvorgang, **dadurch gekennzeichnet, dass** das Verfahren ferner die folgenden Schritte umfasst:
Aufkleben der Antennenspule (135) an den Anschluss (166) eines integrierten Schaltungschips (165) durch Zünden, um eine Zündkapsel (136) zur Explosion zu bringen, indem externe Wärme von 160 °C∼210 °C für 0,5 bis 1 Sekunde auf die Zündkapsel (136) angewendet wird.

2. Verfahren zur Herstellung einer Karte nach Anspruch 1, wobei die Grundierung (136) aus einem Nitrat, Wismut, Zinn und Flussmittel besteht und das Verfahren weiterhin die folgenden Schritte umfasst:
Umsetzung des Nitrats und von Wismut durch Zufuhr von äußerer Wärme zum Explodieren und gleichzeitigen Erzeugen hoher Hitze; und
Schmelzen von Zinn und Flussmittel zur Bindung des Steckers.

3. Verfahren zur Herstellung einer Karte nach Anspruch 1, das ferner die folgenden Schritte umfasst:
die aus Schießpulver, Zinn und Flussmittel bestehende Zündkapsel (136) durch Anwendung von äußerer Wärme und gleichzeitiger Erzeugung hoher Hitze zur Explosion bringen; und
Schmelzen von Zinn und Flussmittel zur Bindung des Steckers.

4. Verfahren zur Herstellung einer Karte nach Anspruch 2 oder 3, den folgenden Schritt umfassend:
Aufnehmen einer Silberkomponente, Ag, in die Zündkapsel (136) zur Verbesserung der Charakteristik der Antenne.

5. Verfahren zur Herstellung einer Karte nach Anspruch 1, das ferner den folgenden Schritt umfasst:
Bildung einer Zickzackform an beiden Enden von Biegungen (137) der Antennenspulen (135), um die Kontaktfläche zu den Anschlüssen (166) des IC-Chips (165) zu verbreitern.

6. Verfahren zur Herstellung einer Karte nach Anspruch 1, wobei die Zündkapsel (136) aus einem Nitrat, Wismut, Zinn und Flussmittel besteht.

7. Verfahren zur Herstellung einer Karte nach Anspruch 1, wobei die Zündkapsel (136) aus Schießpulver, Zinn und Flussmittel besteht.

8. Verfahren zur Herstellung einer Karte nach Anspruch 1, das weiterhin den folgenden Schritt vor dem Klebeschritt umfasst:
Aufbringen eines Klebebandes (185) auf den IC-Chip-Sockel (160) und das Inlay-Blatt (130).

9. Verfahren zur Herstellung einer Karte nach Anspruch 1, das weiterhin die folgenden Schritte in der Phase des Klebeschritts umfasst:
Umsetzen eines sauren Materials bis unter pH 4 im Periodensystem und eines Metalls der Pro- oder Aft-15-Familie zur Erzeugung großer Wärme durch gleichzeitige Explosion der Zündkapsel (136); und
Schmelzen eines Metalls der Pro- oder Aft-14-Familie in der chemischen Tabelle, um die Antennenspule (135) und den Anschluss (166) des IC-Chips (165) zu binden.

## Revendications

1. Procédé de fabrication d'une carte, comprenant les étapes comprenant :
l'adhérence d'un stratifié d'une feuille frontale imprimée (120), d'une bobine d'antenne (135), d'une feuille intercalaire enroulée (130) et d'une feuille arrière imprimée (140) l'une après l'autre ; et
l'exposition de la bobine d'antenne (135) de la feuille intercalaire (130) grâce à une opération de rainurage **caractérisé en ce que** le procédé comprend en outre les étapes comprenant :
l'adhérence de la bobine d'antenne (135) au connecteur (166) d'une puce (165) de circuit intégré, CI, par ignition afin de faire exploser un amorçage (136) par l'application d'une chaleur externe comprise entre 160 °C et 210 °C pendant 0,5 à 1 seconde sur l'amorçage (136).

2. Procédé de fabrication d'une carte selon la revendication 1, dans lequel ledit amorçage (136) est constitué d'un nitrate, de bismuth, d'étain et d'un fondant et le procédé comprend en outre les étapes consistant à :
faire réagir le nitrate et le bismuth par application d'une chaleur externe afin de les faire exploser et de générer une chaleur élevée de manière simultanée ; et
faire fondre l'étain et le fondant afin de les lier au connecteur.

3. Procédé de fabrication d'une carte selon la revendication 1, comprenant en outre les étapes consistant à :
faire exploser l'amorçage (136), qui est composé de poudre à canon, d'étain et d'un fondant, par application d'une chaleur externe et par génération d'une chaleur élevée de manière simultanée ; et
faire fondre l'étain et le fondant afin de les lier au connecteur.

4. Procédé de fabrication d'une carte selon la revendication 2 ou la revendication 3, comprenant l'étape consistant à :
inclure un composant d'argent, Ag, dans l'amorçage (136) afin d'améliorer la caractéristique de l'antenne.

5. Procédé de fabrication d'une carte selon la revendication 1, comprenant en outre l'étape consistant à :
former une forme de zigzag aux deux extrémités des parties coudées (137) des bobines d'antenne (135) afin d'élargir la zone de contact avec les connecteurs (166) de la puce du CI (165).

6. Procédé de fabrication d'une carte selon la revendication 1, dans lequel ledit amorçage (136) est constitué d'un nitrate, de bismuth, d'étain et d'un fondant.

7. Procédé de fabrication d'une carte selon la revendication 1, dans lequel ledit amorçage (136) est constitué de poudre à canon, d'étain et d'un fondant.

8. Procédé de fabrication d'une carte selon la revendication 1, comprenant en outre l'étape suivante avant l'étape d'adhérence :
attachage d'une bande adhésive (185) sur la base de la puce du CI (160) et sur la feuille intercalaire (130).

9. Procédé de fabrication d'une carte selon la revendication 1, comprenant en outre les étapes suivantes au moment de la phase de l'étape d'adhérence :
réaction d'un matériau acide à un pH inférieur à 4 dans le tableau périodique et d'un métal de la famille avant ou après 15 afin de générer une chaleur élevée par l'explosion de l'amorçage (136) de manière simultanée ; et
fusion d'un métal de la famille avant ou après 14 dans le tableau périodique afin de lier la bobine d'antenne (135) et le connecteur (166) de la puce du CI (165).
